# EUROPÄISCHE PATENTSCHRIFT

(11) **EP 3 520 576 B1**
(45) Veröffentlichungstag und Bekanntmachung des Hinweises auf die Patenterteilung: **03.06.2020**
(21) Anmeldenummer: 17783454.6
(22) Anmeldetag: 09.10.2017
(51) Int. Cl.: H05B 47/10, F24F 11/61, H05B 47/105

(54) **SYSTEM UND VERFAHREN ZUR ERSTELLUNG VON ANWESENHEITSPROFILEN FÜR DIE GEBÄUDESTEUERUNG**
SYSTEM AND METHOD FOR GENERATING PRESENCE PROFILES FOR THE CONTROL OF BUILDINGS
SYSTÈME ET MÉTHODE POUR CONSTITUER DES PROFILS DE PRÉSENCE ACTIF POUR CONTROLLER DES BÂTIMENTS

(30) Priorität: 16.11.2016 DE 102016222471
(43) Veröffentlichungstag der Anmeldung: 07.08.2019
(73) Patentinhaber: Tridonic GmbH & Co. KG, 6851 Dornbirn (AT); Zumtobel Lighting GmbH, 6850 Dornbirn (AT)
(72) Erfinder: KISTLER, Roger, 8755 Ennenda (CH); KÜNZLI, Markus, 8750 Glarus (CH); FÖRSTLER, Harry, 8754 Netstal (CH); JELICIC, Vana, 6850 Dornbirn (AT)
(74) Vertreter: Beder, Jens
(86) Internationale Anmeldenummer: PCT/EP2017/075628
(87) Internationale Veröffentlichungsnummer: WO 2018/091202

(56) Entgegenhaltungen:
- EP-A1- 1 387 330
- WO-A1-2013/035022
- DE-A1- 4 308 983
- US-A- 4 225 808
- US-A1- 2015 168 003
- US-A1- 2016 085 248
- US-A1- 2016 305 678

## Beschreibung

Die vorliegende Erfindung betrifft ein System und ein Verfahren zur Erstellung von Anwesenheitsprofilen von Personen in einem bestimmten Erfassungsbereich.

Sensoren zur Anwesenheitsdetektion werden oft in der Beleuchtungstechnik eingesetzt um ein Schaltsignal bei Erkennen einer Anwesenheit einer Person zu erzeugen und die Beleuchtung in Abhängigkeit von An- oder Abwesenheit von Personen automatisch zu schalten. Solche Sensoren nutzen zur Personendetektion hauptsächlich die Passiv-Infrarot (PIR)- oder die Radar-Technologie.

Beide Technologien geben keine Informationen zur Anzahl von Personen im Erfassungsbereich oder deren Bewegungsrichtung und haben einen begrenzten Erfassungsbereich, welcher auch von der Umgebung des Sensors abhängt. Gegenstände im Erfassungsbereich können das zu erfassende Objekt verdecken, so dass das Licht nicht oder zu spät einschaltet.

Für die Ansteuerung von Gebäudetechnikkomponenten, wie Aktoren für Tore, Türen oder Fenster, Leuchten, Heizungs- oder Klimageräte, sind jedoch Informationen über die Anzahl der sich in einem Raum/Bereich befindlichen Personen und/oder deren Bewegung (Richtung und Geschwindigkeit) nützlich, um beispielsweise bei der Steuerung der Heizung oder Klimaanlage die von Personen abgegebene Eigenwärme zu berücksichtigen oder eine für den bevorzugten Aufenthaltsort optimierte Heizung/Kühlung/Lüftung zu ermöglichen oder vorrausichtlich in Bewegungsrichtung liegende Leuchten oder Tore zeitnah einzuschalten bzw. zu öffnen.

Der Erfindung liegt die Aufgabe zugrunde, ein System und ein Verfahren anzugeben, die die beschriebenen Probleme verringern. Aufgabe ist es insbesondere, ein System und ein Verfahren zu schaffen, das weitere Informationen zur Nutzung eines Raums oder Gebäudes durch erfasste Objekte, welche über die bloße Angabe der Präsenz zumindest eines Objekts in einem Erfassungsbereich hinausgehen, bereitstellen.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung wird eine Anwesenheit eines Objektes für jeden Teilbereich aus einer Mehrzahl von verschiedenen Teilbereichen, die gemeinsam einen Erfassungsbereich bilden, ermittelt und ein Anwesenheitsprofil erstellt, das Informationen über die Anwesenheit von Personen bezüglich verschiedener Teilbereiche des Erfassungsbereichs enthält. Das Anwesenheitsprofil kann insbesondere Informationen über die Aufenthaltsorte von allen erfassten Personen mit einer durch die Teilbereiche vorgegebenen Ortsauflösung enthalten wobei vorzugsweise Anwesenheiten zeitaufgelöst angegeben sind.

Hierzu weist das System mindestens einen Sensor zur separaten Detektion der Anwesenheit einer Person für jeden Teilbereich einer Mehrzahl verschiedener Teilbereiche des Erfassungsbereichs und eine Datenverarbeitungseinrichtung zur Erstellung und Ausgabe zumindest eines Anwesenheitsprofils für den Erfassungsbereich auf Grundlage der in den verschiedenen Teilbereichen, vorzugsweise zeitaufgelöst, detektierten Anwesenheiten von Personen auf.

Der Erfassungsbereich kann in einem Gebäude liegen und ein, mehrere oder alle Zimmer des Gebäudes umfassen oder auch außerhalb eines Gebäudes liegen. Anzahl und Größe der Teilbereiche können so gewählt werden, dass einzelne Personen einem Teilbereich zuordenbar sind, wobei sich zumindest einige der Teilbereiche überlappen können.

Die erfassten Anwesenheiten können von der Datenverarbeitungseinrichtung protokolliert werden, um Anwesenheitsmuster und/oder Bewegungsmuster zu erkennen und Anwesenheiten auszuwerten und/oder vorherzusagen. Dies ermöglicht z.B. ein Einschalten einer Beleuchtung oder Heizung eines Raumes bereits bevor eine Person den Erfassungsbereich (Raum) betritt oder bevor die Person hinter einem den Detektionsbereich verdeckenden Gegenstand hervortritt. Zudem kann ein unnötiger Betrieb der Heizung oder Beleuchtung bei vorhergesagter Abwesenheit von Personen über einen längeren Zeitraum vermieden werden. Die Vorhersage basiert auf einer Beobachtung aus der Vergangenheit und geht davon aus, dass sich in der Vergangenheit wiederholt gezeigte Muster in der Zukunft ebenfalls wiederholen.

Hierfür kann die Datenverarbeitungseinrichtung dazu ausgebildet sein, detektierte Anwesenheiten von Objekten örtlich und/oder zeitlich zu klassifizieren und zu speichern und vorzugsweise die Anwesenheit zumindest einer Person in dem Erfassungsbereich bzw. in einem Teilbereich auf der Grundlage der klassifizierten Anwesenheiten vorherzusagen. Es wird ein Anwesenheitsprofil auf der Grundlage der erfassten Anwesenheit(en) erstellt und ausgegeben.

Ein Anwesenheitsprofil kann Bewegungsrichtungen zu einem bestimmten Zeitpunkt, Bewegungen im Sinne von Ortsveränderungen der Personen über einen bestimmten Zeitbereich und/oder Geschwindigkeiten solcher Bewegungen der Personen in dem Erfassungsbereich anzeigen. Mit diesem Anwesenheitsprofil können in der Bewegungsrichtung befindliche Türen und Leuchten geöffnet bzw. eingeschaltet und/oder gedimmt, und/oder mit einer an die Bewegungsgeschwindigkeit angepassten Schnelligkeit aktiviert werden.

Bei der Detektion der Bewegung einer Person können die Anzahl oder auch die Positionen (Teilabschnitte) von Bewegungsstopps erfasst werden und ein Anwesenheitsprofil aus den erfassten Stopps erstellt werden. Alternativ oder zusätzlich kann ein Anwesenheitsprofil die Dauer oder auch die Position von Stopps anzeigen.

Alternativ oder zusätzlich kann ein Anwesenheitsprofil eine Anzahl der über einen bestimmten Zeitbereich in dem Erfassungsbereich oder in einem, mehreren ausgewählten oder in jedem Teilbereich detektierten bzw. vorhergesagten Anwesenheiten anzeigen. Dies erlaubt die automatische oder durch einen Systembediener durchzuführende Anpassung der Raumlüftung/Heizung an die Anzahl anwesender Personen, die Vorhersage/Planung einer Reinigung oder Ermittlung eines Reinigungsbedarfs für den Erfassungsbereich und/oder die Auswertung/Ermittlung von typischen Aufenthaltsbereichen von Personen. So kann beispielsweise in einem Verkaufsraum (Erfassungsbereich) festgestellt werden, welche Artikel, die in einem bestimmten Teilbereich angeboten werden, besonders interessant/frequentiert sind.

Alternativ oder zusätzlich kann das Anwesenheitsprofil mit einer Temperaturverteilung in dem Erfassungsbereich kombiniert werden, wobei zumindest ein Sensor dazu ausgebildet ist, Temperaturen insbesondere von Objekten in dem Erfassungsbereich zu detektieren. Mit diesem kombinierten Anwesenheitsprofil kann eine resultierende Raumtemperatur ermittelt, die Klimatisierung innerhalb des Raum/Erfassungsbereichs für bestimmte Bereichen angepasst und/oder eine gefährliche Hitzentwicklung/-quelle im Erfassungs- oder einem Teilbereich erkannt werden, um z.B. Alarm auszulösen.

Zusätzlich kann die Datenverarbeitungseinrichtung dazu ausgebildet sein, auf der Grundlage der Objekttemperaturen Personen von Objekten in dem Erfassungsbereich zu unterscheiden. Dies ist besonders einfach, wenn PIR-Sensoren verwendet werden. Dabei wird ausgenutzt, dass Personen eine im Wesentlichen konstante Oberflächentemperatur haben. Bei einer Lampe dagegen ändert sich z.B. deren Temperatur, wenn sie eingeschaltet wird. Andererseits ist die Lampe in der Regel ortsfest. Wiederum andere Objekte haben dagegen eine Temperatur, die nicht von einer Person stammen kann. Diese Unterschiede können bei der Auswertung durch die Datenverarbeitungseinrichtung berücksichtigt werden, um Objekte von Personen zu unterscheiden. Hierzu wird von dem PIR-Sensor auch die Temperaturinformation ausgegeben und der Datenverarbeitungseinrichtung zugeführt.

Alternativ oder zusätzlich kann unter Berücksichtigung des Anwesenheitsprofils eine sogenannte "Heatmap", d.h. ein Diagramm zur Visualisierung einer Verteilung von Temperaturen im Erfassungsbereich, erstellt werden.

Zumindest ein Sensor kann ein mit einer Optik versehener Bewegungsmelder sein und/oder zumindest einige Sensoren Bewegungsmelder, bei denen jeweils einer auf einen der verschiedenen Teilbereiche ausgerichtet ist.

Das System kann zusätzlich eine Steuereinrichtung zur Steuerung von zumindest einer Gebäudetechnikkomponente auf Grundlage des von der Datenverarbeitungseinrichtung ausgegebenen Anwesenheitsprofils aufweisen. Die Gebäudetechnikkompenente kann zu einem Gebäudetechnikteilsystem gehören, das mit einem anderen, oder mehreren Gebäudetechnikteilsystemen zur Übertragung von Informationen über eine Signal-oder Datenschnittstelle verbunden sein. Einem der Gebäudetechnikteilsysteme ist der wenigstens ein Sensor zugeordnet. Die Datenverarbeitungseinrichtung kann in demselben Gebäudetechnikteilsystem oder einem anderen vorgesehen sein. Weiterhin ist es möglich, dass mehrere Sensoren, die zumindest teilweise zu unterschiedlichen Gebäudetechnikteilsystemen gehören, Informationen liefern, die der Datenverarbeitungseinrichtung zugeführt werden. Beispiele für solche Gebäudetechnikteilsysteme sind Beleuchtungssysteme, Heizungs-/Klimatisierungssysteme, Türsteuerungen, Lüftungssysteme usw. Insbesondere Beleuchtungs- und Türsteuerungssysteme können dabei über eigene Sensoren zur Anwesenheitserkennung verfügen, die zur Erstellung eines Anwesenheitsprofils Daten beisteuern.

Das Verfahren zur Erstellung eines Anwesenheitsprofils von Personen in einem Erfassungsbereich gemäß der vorliegenden Erfindung weist die Schritte:
- Detektieren einer Anwesenheit einer Person separat für jeden einer Mehrzahl verschiedener Teilbereiche des Erfassungsbereichs mittels wenigstens eines Sensors und
- Erstellen und Ausgeben zumindest eines Anwesenheitsprofils auf Grundlage der in den verschiedenen Teilbereichen detektierten Anwesenheiten von Personen auf. Die detektierten Anwesenheiten von Personen werden örtlich und bevorzugt auch zeitlich klassifiziert und gespeichert.

Gemäß einem Ausführungsbeispiel weist ein Verfahren zur Steuerung von Gebäudetechnikkomponenten die Schritte:
- Erstellen zumindest eines Anwesenheitsprofils gemäß dem beschriebenen Verfahren und
- Steuern zumindest einer Gebäudetechnikkomponente unter Berücksichtigung des erstellten ausgegebenen Anwesenheitsprofils auf.

Ein Anwesenheitsprofil kann Bewegungsrichtungen der Person(en) zu einem bestimmten Zeitpunkt, Bewegungen (Ortsveränderungen) über einen bestimmten Zeitbereich und/oder Geschwindigkeiten der Bewegungen in dem Erfassungsbereich anzeigen. Eine Gebäudetechnikkomponente kann insbesondere eine Leuchte sein, wobei in dem Steuerungsschritt, die Leuchte bei einer Bewegung eines Objektes in Richtung der Leuchte eingeschaltet oder hoch gedimmt wird, bei einer Bewegung, die von der Leuchte wegführt, die Leuchte ausgeschaltet oder herunter gedimmt wird und/oder der Ein-/Ausschaltzeitpunkt oder die Dimm-Geschwindigkeit an die Geschwindigkeit der Bewegungen anpasst wird.

Alternativ oder zusätzlich kann ein Anwesenheitsprofil eine Anzahl der über einen bestimmten Zeitbereich in dem gesamten Erfassungsbereich oder in einem, mehreren oder in jedem Teilbereich detektierten bzw. vorhergesagten Anwesenheiten anzeigen. Eine Gebäudetechnikkomponente kann ein in einem Erfassungsbereich angeordnetes Heizungs- oder Klimagerät sein, wobei in dem Steuerungsschritt, das Heizungs- bzw. Klimagerät auf der Grundlage der detektierten bzw. vorhergesagten Anwesenheiten gesteuert wird. US2016/0085248 offenbart ein System zur Erstellung eines Raumklimamodells, das die Temperaturen und/oder andere Klimawerte an bestimmten Positionen in einem oder mehreren Räumen anzeigt und das für die Steuerung der Klimatisierung genutzt wird.

Der Schutzumfang der Erfindung wird durch den Gegenstand der unabhängigen Ansprüche 1 und 10 definiert. Nachfolgend wird die Erfindung anhand der beiliegenden Zeichnungen näher erläutert. Es zeigen:
Fig. 1 schematisch den Aufbau eines Systems zur Erstellung eines Anwesenheitsprofils nach einem Ausführungsbeispiel gemäß der vorliegenden Erfindung;
Fig. 2 schematisch den Aufbau einer Gebäudetechniksteuervorrichtung nach einem Ausführungsbeispiel gemäß der vorliegenden Erfindung;
Fig. 3 vier Diagramme mit jeweils im Laufe eines Tages erfassten Anwesenheiten; und
Fig. 4 ein Beispiel einer Raumanordnung mit Sensoren für die Erstellung eines Anwesenheitsprofils gemäß der vorliegenden Erfindung.

Komponenten mit gleichen Funktionen sind in den Figuren mit gleichen Bezugszeichen gekennzeichnet.

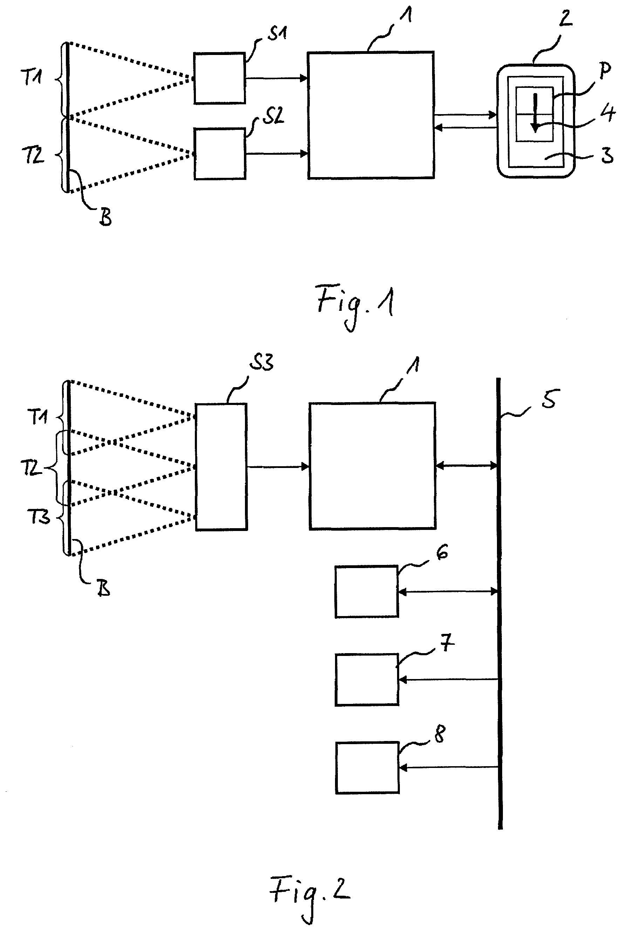

Fig. 1 zeigt eine vereinfachte Schaltung eines Systems zur Erstellung eines Anwesenheitsprofils nach einem Ausführungsbeispiel gemäß der vorliegenden Erfindung, das zwei Sensoren S1 und S2 zur Anwesenheitsdetektion und eine Datenverarbeitungseinrichtung 1 zur Verarbeitung der von den Sensoren S1 und S2 erhaltenen Daten oder Signale und zur Ausgabe des aus den Daten/Signalen erzeugten Anwesenheitsprofils an eine Auswertungsvorrichtung 2 hat. Die Auswertungsvorrichtung 2 kann ein Smartphone, ein Personal Computer (PC) oder eine Aus- und Eingabeeinheit einer Gebäudesteuervorrichtung mit einer grafischen Benutzerschnittstelle (englisch "graphical user interface", GUI) sein, welche über eine Kabel- oder Funkverbindung mit Datenverarbeitungseinrichtung 1 koppelbar ist. Die Auswertevorrichtung kann auch eine Steuer- oder Regelvorrichtung eines gesamten Gebäudetechniksystems oder desselben Gebäudetechnikteilsystems, zu dem die Sensoren S1, S2 gehören, oder eines anderen Gebäudetechnikteilsystems sein.

Die Sensoren S1 und S2 können PIR-Bewegungsmelder mit einem eingrenzbaren Sensor-Erfassungsbereich sein. Jeder solche Sensor-Erfassungsbereich T1, T2 entspricht damit einem Teilbereich eines gesamten Erfassungsbereichs. Der Sensor S1 ist auf einen Teilbereich T1 des in Fig. 1 als durchgehender Strich dargestellten Erfassungsbereichs B gerichtet und sendet bei einer Anwesenheit/Bewegung einer Person in dem Teilbereich T1 ein deren Anwesenheit anzeigendes Signal an die Datenverarbeitungseinrichtung 1, welche die angezeigte Anwesenheit/Bewegung dem Teilbereich T1 zuordnet. Der Sensor S2 ist dagegen auf einen weiteren Teilbereich T2 des Erfassungsbereichs B gerichtet und sendet bei einer Anwesenheit/Bewegung einer Person in dem Teilbereich T2 ein Signal an die Datenverarbeitungseinrichtung 1, welche die gemeldete Anwesenheit/Bewegung dem Teilbereich T2 zuordnet und damit eine Ortsauflösung von Anwesenheiten von (einer) Person(en) in dem Erfassungsbereich B ermöglicht.

Die Datenverarbeitungseinrichtung 1 kann ein Personal Computer (PC) oder ein Mikrocontroller sein und ist in diesem Beispiel dazu ausgelegt, nicht nur eine ortsaufgelöste Anwesenheit, sondern eine Bewegungsrichtung eines von den Sensoren S1 und S2 erfassten Objekts in dem Erfassungsbereich B über die zeitliche Abfolge der gemeldeten Anwesenheiten/Bewegungen in den Teilbereichen T1 und T2 zu ermitteln und ein die ermittelte Bewegungsrichtung anzeigendes Anwesenheitsprofil zu erstellen und an die Auswertungsvorrichtung 2 ggf. auf Aufforderung hin auszugeben. Selbstverständlich kann das Anwesenheitsprofil weitere Informationen enthalten, wie z.B. Gesamtdauer der Anwesenheit einer Person in dem Erfassungsbereich B oder einem der Teilbereiche T1, T2, Zeitpunkt der Ortsveränderung von T1 nach T2, Zeitpunkt der erstmaligen Erfassung der Person, usw.

Die Auswertungsvorrichtung 2 zeigt das von der Datenverarbeitungseinrichtung 1 empfangene Anwesenheitsprofil P auf einem Bildschirm 3 an oder verarbeitet es weiter. Das auf dem Bildschirm 3 dargestellte Anwesenheitsprofil P beinhaltet den durch die Teilbereiche T1 und T2 geteilten Erfassungsbereichs B mit einem die ermittelte Bewegungsrichtung anzeigenden Pfeil 4 und ggf. die oben genannten weiteren Informationen oder Teile davon.

Fig. 2 zeigt schematisch den Aufbau einer Gebäudetechniksteuervorrichtung nach einem Ausführungsbeispiel gemäß der vorliegenden Erfindung. Die in Fig. 2 gezeigte Vorrichtung zur Erstellung eines Anwesenheitsprofils P ist über ein Bussystem 5 mit einer Steuereinrichtung 6 zur Steuerung einer Leuchte 7 und eines Heizgerätes 8 als Beispiele für Elemente zweier Gebäudetechnikteilsysteme verbunden und weist einen einzelnen Sensor S3 auf, der drei Teilbereiche T1, T2 und T3 des Erfassungsbereichs B überwacht, wobei sich sowohl die Teilbereiche T1 und T2 als auch die Teilbereiche T2 und T3 überlappen. Generell ist der Erfassungsbereich die Summe aller gemeinsam ausgewerteten Teilbereiche, die sich grundsätzlich auch überlappen können.

Der Sensor S3 detektiert die Anwesenheit/Bewegung einer Person in einem oder in mehreren Teilbereichen T1, T2 und T3 und sendet ein entsprechendes Signal an die Datenverarbeitungseinrichtung 1, das den oder die Teilbereiche T1, T2 und T3 anzeigt, in welchen eine Anwesenheit/Bewegung detektiert wurde. Die Datenverarbeitungseinrichtung 1 erzeugt aus den von dem Sensor S3 empfangenen Signalen ein Anwesenheitsprofil P, das Bewegungsrichtungen von erfassten Personen die Anzahl von erfassten Anwesenheiten bezüglich jedem der Teilbereiche T1, T2 und T3 wiedergibt und sendet das Anwesenheitsprofil P an die Steuereinrichtung 6. Es ist auch denkbar, die einzelnen Informationen (Anwesenheit, Bewegungsrichtung ...) in separaten Anwesenheitsprofilen anzugeben. Die Steuereinrichtung 6 ist mit der Leuchte 7 und dem Heizgerät, welche in oder in der Nähe eines der Teilbereiche T1, T2 und T3 angeordnet sind, über das Bussystem 5 verbunden und steuert die Leuchte 7 und das Heizgerät auf Grundlage der Anwesenheitsprofile P.

Die Anzahl der Sensoren S1 und S2 bzw. die Anzahl der von dem Sensor S3 überwachten Teilbereiche T1, T2 und T3 ist nicht auf zwei bzw. drei begrenzt und kann auch ein Vielfaches davon betragen, um die Genauigkeit/Auflösung in dem Erfassungsbereich B zu erhöhen.

Die Datenverarbeitungseinrichtung 1 kann eine Vielzahl von verschiedenen Anwesenheitsprofilen erstellen und ausgeben. Diese können Bewegungsrichtungen der Objekte zu einem bestimmten Zeitpunkt, Bewegungen der Objekte über einen bestimmten Zeitbereich, Geschwindigkeiten der Bewegungen der Objekte in dem Erfassungsbereich anzeigen.

Muster für Anwesenheitsprofile P, welche auf eine bestimmte Gefahrensituation schließen lassen, können in der Datenverarbeitungseinrichtung 1 und/oder der Steuereinrichtung 6 abgelegt sein und fortwährend oder zu bestimmten Zeiten mit dem von der Datenverarbeitungseinrichtung 1 aktuell erstellten Anwesenheitsprofil P verglichen bzw. korreliert werden. Bei einem bestimmten Grad der Übereinstimmung kann ein Alarmsignal von der Datenverarbeitungseinrichtung 1 oder der Steuereinrichtung 6 abgegeben werden. Auf diese Weise können Gefahrensituationen und/oder spezielle Vorkommnisse leicht erkannt werden.

Alternativ oder zusätzlich kann die Datenverarbeitungseinrichtung 1 dazu ausgelegt sein, bei einem bestimmten Grad der Abweichung von aktuell erfasster Anwesenheit mit von einem z.B. aus in der Vergangenheit erfassten Anwesenheiten erstellten und gespeicherten Anwesenheitsmuster ein Warnsignal auszugeben. Das gespeicherte Anwesenheitsmuster kann ein typisches, zu erwartendes Muster oder ein von der Datenverarbeitungseinrichtung 1 vorhergesagtes Muster sein. Es ist auch möglich die Vorkommnisse (erkannten Anwesenheitsmuster) zu klassifizieren.

Bei vielen Bewegungs- bzw. Anwesenheitsmustern liegen stochastische Prozesse vor. Die Datenverarbeitungseinrichtung 1 kann dazu ausgelegt sein, diese Prozesse auf der Grundlage der zeitlich erfassten bzw. protokollierten Anwesenheiten mit einem stochastischen Modell zu lernen und so ein Anwesenheitsprofil P vorherzusagen. Für das Lernen können z.B. neuronale Netzwerke wie selbstorganisierende Karten, Kohonenkarten oder Kohonennetze (englisch self-organizing map, SOM), Lernende Vektorquantisierung (englisch learning vector quantization, LVQ) oder einfach Heuristiken verwendet werden.

Hierzu kann die Datenverarbeitungseinrichtung 1 dazu ausgelegt sein, die bezüglich der Teilbereiche T1, T2 und T3 gespeicherten/protokollierten Anwesenheiten zu analysieren um daraus spezielle Anwesenheitsmuster und/oder Charakteristiken zu extrahieren. Die Muster/Charakteristiken werden gespeichert und von der Datenverarbeitungseinrichtung 1 an von den Sensoren S1 und S2 bzw. S3 neu erfasste An- bzw. Abwesenheiten entsprechend der obengenannten Verfahren adaptiert. Auf diese Weise kann die Vorhersage fortlaufend neu angepasst werden. Die gespeicherten Muster und Charakteristiken bzw. Daten/Datenmodell für die Anwesenheitsvorhersage können für eine externe Anpassung oder für eine Verwendung in anderen Vorrichtungen ausgelesen werden. Hierfür kann die Datenverarbeitungseinrichtung 1 über digitale Schnittstellen, wie Bluetooth und/oder DALI, verfügen, mittels der die gespeicherten Daten/Datenmodell oder auch Anwesenheitsprofile P ausgelesen und/oder in die Datenverarbeitungseinrichtung 1 eingeschrieben werden können.

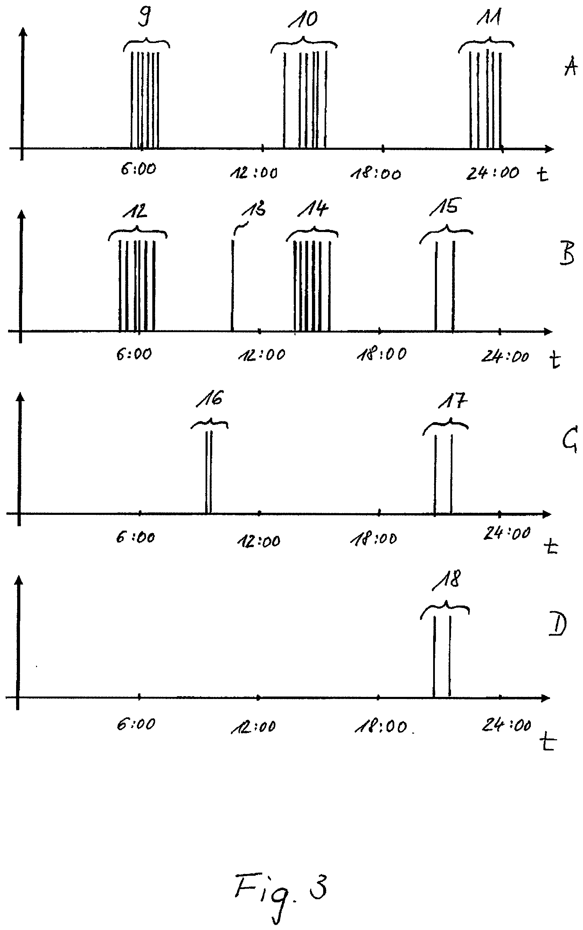

Fig. 3 zeigt vier Diagramme A, B, C, D mit jeweils an einem Tag von den Sensoren S1 und S2 bzw. S3 detektierten Anwesenheiten, wobei ein senkrechter Strich 9..18 eine erfasste Anwesenheit in dem Teilbereich T1, einem Eingangsbereich eines Gebäudes/Betriebes, zu der im Diagramm angegebenen Uhrzeit entspricht. Das Diagramm A zeigt die erfassten Anwesenheiten an einem der Wochentage Montag bis Freitag, das Diagramm B die erfassten Anwesenheiten an einem Samstag, das Diagramm C die erfassten Anwesenheiten an einem Sonntag und das Diagramm D die erfassten Anwesenheiten an einem Ferientag.

In dem Diagramm A sind die Striche 9 erfasste Anwesenheiten z.B. von zur Frühschicht des Betriebes kommenden Personen, die Striche 10 erfasste Anwesenheiten von zur Spätschicht kommenden Personen und von der Spätschicht gehender Personen und die Striche 11 erfasste Anwesenheiten von von der Spätschicht gehenden Personen.

In dem Diagramm B sind die Striche 12 erfasste Anwesenheiten von zur Frühschicht kommenden Personen, der Strich 13 eine erfasste Anwesenheit einer verspäteten Person, die Striche 14 erfasste Anwesenheiten von von der Frühschicht gehenden Personen und die Striche 15 erfasste Anwesenheiten eines Nachtwächters. In dem Diagramm C sind die Striche 16 erfasste Anwesenheiten von einer Person, die z.B. etwas vergessen hat und den Erfassungsbereich gleich wieder verlässt und die Striche 17 erfasste Anwesenheiten des Nachtwächters. In dem Diagramm D sind die Striche 18 erfasste Anwesenheiten des Nachtwächters. Die in den Diagrammen B, C und D erfassten Anwesenheiten des Nachtwächters (Striche 15, 17, 18) stellen ein stabiles wiederkehrendes Muster dar und können von der Datenverarbeitungseinrichtung 1 als an Samstagen, Sonntagen und Ferientagen wiederkehrende Anwesenheiten extrahiert bzw. gelernt werden. Die Datenverarbeitungseinrichtung 1 kann damit auch die Anwesenheit des Nachtwächters für die drei Klassen (Samstag, Sonntag und Ferientag) vorhersagen und die Steuereinrichtung 6 die Beleuchtung oder Tür in dem Eingangsbereich eines Gebäudes/Betriebes zeitnah oder vorfristig auf Grundlage des (vorhergesagten) Anwesenheitsprofils P einschalten.

Dagegen werden die mit den Strichen 13 und 16 in dem Diagramm B bzw. C gekennzeichneten Anwesenheiten mit großer Wahrscheinlichkeit nicht oder zumindest nicht zu den gleichen Zeiten wiederkehren und von der Datenverarbeitungseinrichtung 1 herausgefiltert bzw. nicht als wiederkehrendes Muster erkannt. Ein Einschalten der Beleuchtung zu dieser Zeit erfolgt jedoch, wenn von den Sensoren S1 und S2 bzw. S3 tatsächlich eine Anwesenheit detektiert wird.

Die mit den Strichen 9, 10 und 11 in dem Diagramm A und mit den Strichen 12 und 14 in dem Diagramm B gekennzeichneten Anwesenheiten werden mit großer Wahrscheinlichkeit zumindest zu ähnlichen Zeiten wiederkehren. Die Datenverarbeitungseinrichtung 1 erlernt mit den über mehrere Tage erfassten Anwesenheiten das Muster für die Wochentage Montag bis Freitag und das Muster für Samstage, wobei mehrere zeitlich nahe beieinanderliegende Anwesenheiten zu einer Gruppe, während der die Beleuchtung eingeschaltet bleiben soll, zusammengefasst werden können.

Auf der Grundlage der erlernten und fortwährend angepassten Muster für jeden Teilbereich T1..T3 kann von der Datenverarbeitungseinrichtung 1 eine Anwesenheit P vorhergesagt werden.

Die Datenverarbeitungseinrichtung 1 kann dazu ausgelegt sein, die erlernten/vorhergesagten Anwesenheiten oder Bewegungsprofile über eine Schnittstelle als Anwesenheitsprofil P auszugeben und/oder solche von einer anderen Vorrichtung zu empfangen. Ein vorhergesagtes Anwesenheitsprofil P enthält typischerweise mindestens Angaben über Wahrscheinlichkeiten, dass sich eine Person in einem bestimmten Teilbereich eines Erfassungsbereichs zu einem Zeitpunkt aufhält.

Um die Genauigkeit der Vorhersage zu erhöhen bzw. die erfassten Anwesenheiten 9..18 genauer klassifizieren zu können, kann die Datenverarbeitungseinrichtung 1 für die Anwesenheiten 9..18 Anwesenheitsprofile P erstellen, welche die Bewegungsrichtung der Personen anzeigen. Mit diesen Anwesenheitsprofilen P können die erfassten Anwesenheiten 9..18 weiter in aus dem Gebäude kommende Personen und in das Gebäude gehende Personen differenziert werden.

Zumindest einige der Sensoren S1..S3 können dazu ausgebildet sein, die Temperatur in zumindest einigen Teilbereichen T1, T2 und T3 zu detektieren, so dass ein die Temperaturverteilung in dem Erfassungsbereich B anzeigendes Anwesenheitsprofil P von der Datenverarbeitungseinrichtung 1 erzeugt werden kann. Es kann auch zunächst eine Temperaturerfassung zur Erstellung einer sog. Heatmap separat erfolgen und dann mit einem Anwesenheitsprofil P kombiniert werden.

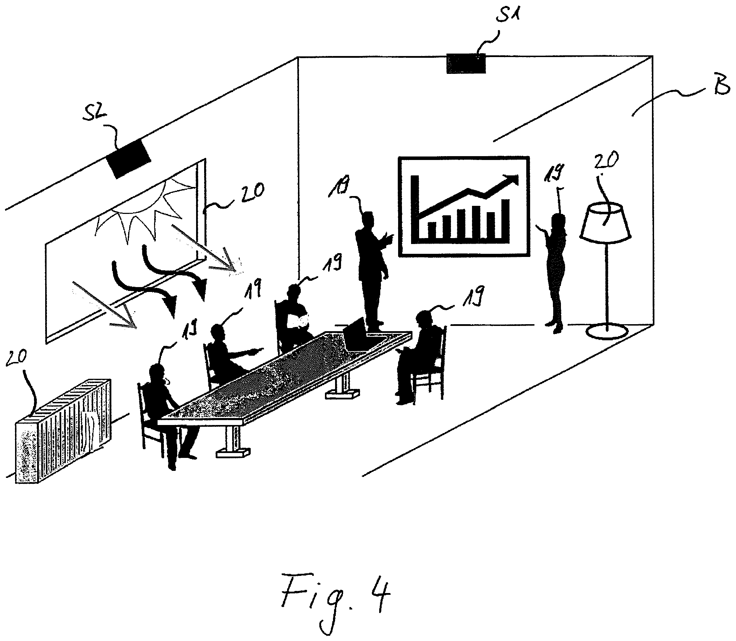

Fig. 4 zeigt einen mit solchen Sensoren S1 und S2 ausgerüsteten Raum, in dem sich Personen 19 und verschiedene (nicht menschliche) Wärmequellen 20 befinden. Für die Erstellung eines Anwesenheitsprofils, das die Temperaturverteilung in dem Raum (Erfassungsbereich B) anzeigt, oder eines kombinierten Profils, erfassen die Sensoren S1 und S2 oder zusätzliche weitere Sensoren die Temperaturen in einer Mehrzahl von Teilbereichen (nicht gezeigt).

Die ermittelte Temperaturverteilung und deren positionelle und zeitliche Änderung kann von der Datenverarbeitungseinrichtung 1 dazu genutzt werden, um die Personen 19 von Objekten als Wärmequellen 20 zu unterscheiden und ein Anwesenheitsprofil lediglich von Personen 19 in dem Erfassungsbereich zu erstellen. Fehler bei der Erstellung eines Anwesenheitsprofils P, bei dem nur die Anwesenheit von Personen von Interesse ist, werden so vermieden. Bei PIR-Sensoren würde sonst eine andere Wärmequelle u.U. als Anwesenheit einer Person erfasst.

Anwesenheitsprofile P, welche auf eine bestimmte Gefahrensituation (z.B. einen Brand oder ein überhitztes Gerät) schließen lassen, können in der Datenverarbeitungseinrichtung 1 und/oder der Steuereinrichtung 6 abgelegt sein und fortwährend oder zu bestimmten Zeiten mit den von der Datenverarbeitungseinrichtung 1 aktuell erstellten Anwesenheitsprofilen P verglichen bzw. korreliert werden. Bei einem bestimmten Grad der Übereinstimmung mit einem Muster kann ein Alarmsignal von der Datenverarbeitungseinrichtung 1 oder der Steuereinrichtung 6 abgegeben werden. Auf diese Weise können Gefahrensituationen und/oder spezielle Vorkommnisse leicht erkannt werden.

Alternativ oder zusätzlich kann die Datenverarbeitungseinrichtung 1 dazu ausgelegt sein, bei einem bestimmten Grad der Abweichung der Übereinstimmung von aus den aktuell erfassten Detektionen zu einem gespeicherten Anwesenheitsprofil P ein Warnsignal auszugeben. Das gespeicherte Anwesenheitsprofil P kann ein typisches, zu erwartendes Anwesenheitsprofil P oder ein von der Datenverarbeitungseinrichtung 1 vorhergesagtes Anwesenheitsprofil P sein.

## Patentansprüche

1. System zur Erstellung eines Anwesenheitsprofils (P) von Personen in einem Erfassungsbereich (B), wobei die Vorrichtung aufweist:
mindestens einen Sensor (S1..S3) zur nach Teilbereichen (T1..T3) des Erfassungsbereichs (B) aufgelösten Detektion einer Anwesenheit wenigstens einer Person und
eine Datenverarbeitungseinrichtung (1) zur Erstellung und Ausgabe zumindest eines Anwesenheitsprofils (P) für den Erfassungsbereich (B) auf Grundlage der in den verschiedenen Teilbereichen (T1..T3) detektierten Anwesenheiten von Personen, wobei das Anwesenheitsprofil (P) Bewegungsrichtungen (4) der Personen zu einem bestimmten Zeitpunkt, Geschwindigkeiten der Bewegungen der Personen in dem Erfassungsbereich (B) und/oder eine Anzahl der über einen bestimmten Zeitbereich in dem Erfassungsbereich (B) oder in jedem Teilbereich (T1..T3) detektierten Anwesenheiten anzeigt; **gekennzeichnet dadurch, daß**
die Datenverarbeitungseinrichtung (1) dazu ausgebildet ist, das erstellte Anwesenheitsprofil mit zumindest einem gespeicherten Anwesenheitsprofil zu vergleichen und bei einem bestimmten Grad der Übereinstimmung oder Abweichung ein Signal auszugegeben.

2. System nach Anspruch 1, wobei
die Datenverarbeitungseinrichtung (1) dazu ausgebildet ist, detektierte Anwesenheiten von Personen zeitlich oder auch örtlich zu klassifizieren und zu speichern, die Anwesenheit zumindest einer Person in dem Erfassungsbereich (B) bzw. in einem Teilbereich (T1..T3) vorherzusagen und zumindest ein Anwesenheitsprofil (P) auf der Grundlage der vorhergesagten Anwesenheit zu erstellen und auszugeben.

3. System nach Anspruch 1 oder 2, wobei
ein Anwesenheitsprofil (P) Bewegungen der Personen über einen bestimmten Zeitbereich anzeigt.

4. System nach einem der Ansprüche 1 bis 3, wobei der
zumindest eine Sensor (S1..S3) dazu ausgebildet ist, Temperaturen von Objekten in dem Erfassungsbereich (B) zu detektieren.

5. System nach Anspruch 4, wobei
die Datenverarbeitungseinrichtung (1) dazu ausgebildet ist, auf der Grundlage der Objekttemperaturen Personen von anderen Objekten in dem Erfassungsbereich (B) zu unterscheiden.

6. System nach einem der Ansprüche 1 bis 5, wobei unter Berücksichtigung des Anwesenheitsprofils (P) ein Wärmeverteilungsplan erstellt wird.

7. System nach einem der Ansprüche 1 bis 6, wobei der
zumindest eine Sensor (S1..S3) ein mit einer Optik zur getrennten Erfassung von Personen und/oder Objekten in den einzelnen Teilbereichen (T1 ... T3) versehener Bewegungsmelder ist oder
zumindest einige Sensoren (S1..S3) Bewegungsmelder sind, wobei jeweils einem der verschiedenen Teilbereiche (T1..T3) ein Sensor zugeordnet ist.

8. System nach einem der Ansprüche 1 bis 7, zusätzlich aufweisend
eine Steuereinrichtung (6) zur Steuerung von zumindest einer Gebäudetechnikkomponente (7, 8) auf Grundlage eines von der Datenverarbeitungseinrichtung (6) ausgegebenen Anwesenheitsprofils (P).

9. System nach Anspruch 8,
**dadurch gekennzeichnet,**
**dass** die Steuereinrichtung (6) und die Datenverarbeitungseinrichtung (6) zu verschiedenen Gebäudetechnikteilsystemen gehören und eine Schnittstelle zur Weitergabe des Anwesenheitsprofils (P) von dem die Datenverarbeitungseinrichtung (6) aufweisenden Gebäudetechnikteilsystems an das die Steuerungseinrichtung (6) aufweisende Gebäudetechnikteilsystem vorgesehen ist.

10. Verfahren zur Erstellung eines Anwesenheitsprofils (P) von Personen in einem Erfassungsbereich (B) mit den Schritten:
Detektieren einer Anwesenheit einer Person in jedem einer Mehrzahl von verschiedenen Teilbereichen (T1..T3) des Erfassungsbereichs mittels wenigstens eines Sensors (S1..S3);
Erstellen eines Anwesenheitsprofils (P) auf Grundlage der in den verschiedenen Teilbereichen (T1..T3) detektierten Anwesenheiten von Personen;
Vergleichen des erstellten Anwesenheitsprofils mit zumindest einem gespeicherten Anwesenheitsprofil; und
Ausgeben eines Signals bei einem bestimmten Grad der Übereinstimmung oder Abweichung des erstellten Anwesenheitsprofils mit/von dem gespeicherten Anwesenheitsprofil; wobei
das Anwesenheitsprofil (P) Bewegungsrichtungen (4) der Personen zu einem bestimmten Zeitpunkt, Geschwindigkeiten der Bewegungen der Personen in dem Erfassungsbereich (B) und/oder eine Anzahl der über einen bestimmten Zeitbereich in dem Erfassungsbereich (B) oder in jedem Teilbereich (T1..T3) detektierten Anwesenheiten anzeigt.

11. Verfahren nach Anspruch 10, wobei die detektierten Anwesenheiten der Personen zeitlich und/oder auch örtlich klassifiziert und gespeichert werden, die Anwesenheit zumindest einer Person in dem Erfassungsbereich (B) bzw. in einem Teilbereich (T1..T3) vorhergesagt werden und zumindest ein Anwesenheitsprofil (P) auf der Grundlage der vorhergesagten Anwesenheit erstellt wird.

12. Verfahren nach Anspruch 11, wobei ein Anwesenheitsprofil (P) Bewegungsrichtungen (4) von detektierten Personen zu einem bestimmten Zeitpunkt, Bewegungen der Personen über einen bestimmten Zeitbereich und/oder Geschwindigkeiten der Bewegungen der Personen in dem Erfassungsbereich (B) anzeigt;
eine Leuchte (7) auf Grundlage des erstellten ausgegebenen Anwesenheitsprofils (P) gesteuert wird; und
in dem Steuerungsschritt, die Leuchte (7) bei einer Bewegung einer Person in Richtung der Leuchte eingeschaltet oder hoch gedimmt wird, bei einer Bewegung der Person, die von der Leuchte wegführt, ausgeschaltet oder herunter gedimmt wird und/oder der Ein-/Ausschaltzeitpunkt oder die Dimm-Geschwindigkeit an die Geschwindigkeit der Bewegungen angepasst wird.

13. Verfahren nach einem der Ansprüche 10 oder 11, wobei
das Anwesenheitsprofil (P) eine Anzahl der über einen bestimmten Zeitbereich in dem Erfassungsbereich oder in jeden Teilbereich (T1..T3) detektierten bzw. vorhergesagten Anwesenheiten anzeigt;
eine Gebäudetechnikkomponente ein in dem Erfassungsbereich angeordnetes Heizungs- oder Klimagerät ist; und
in dem Steuerungsschritt, das Heizungs- bzw. Klimagerät auf der Grundlage eines unter Berücksichtigung des Anwesenheitsprofils erstellten Wärmeverteilungsplans gesteuert oder geregelt wird.

## Claims

1. System for creating a presence profile (P) of persons in a detection area (B), wherein the device has:
at least one sensor (S1, ..., S3) for detecting a presence of at least one person, resolved according to sub-areas (T1, ..., T3) of the detection area (B), and a data-processing device (1) for generating and outputting at least one presence profile (P) for the detection area (B) on the basis of the presences of persons detected in the various sub-areas (T1, ..., T3), wherein the presence profile (P) indicates movement directions (4) of the persons at a defined point in time, speeds of the movements of the persons in the detection area (B) and/or a number of the presences detected in the detection area (B) or in each sub-area (T1, ..., T3) over a defined time period;
**characterized in that**
the data-processing device (1) is designed to compare the created presence profile with at least one stored presence profile, and to output a signal given a certain degree of agreement or deviation.

2. System according to Claim 1, wherein
the data-processing device (1) is designed to chronologically or also spatially classify and store detected presences of persons, to predict the presence of at least one person in the detection area (B) or in a sub-area (T1, ..., T3), and to create and output at least one presence profile (P) on the basis of the predicted presence.

3. System according to Claim 1 or 2, wherein
a presence profile (P) indicates movements of the persons over a defined time range.

4. System according to any one of Claims 1 to 3, wherein the
at least one sensor (S1, ..., S3) is designed to detect temperatures of objects in the detection area (B).

5. System according to Claim 4, wherein
the data-processing device (1) is designed to distinguish persons from other objects in the detection area (B) on the basis of the object temperatures.

6. System according to any one of Claims 1 to 5, wherein a heat distribution plan is created taking into account the presence profile (P).

7. System according to any one of Claims 1 to 6, wherein the at least one sensor (S1, ..., S3) is a motion detector provided with optics for the separate detection of persons and/or objects in the individual sub-areas (T1, ..., T3), or at least some sensors (S1, ..., S3) are motion detectors, wherein a sensor is in each case associated with one of the various sub-areas (T1, ..., T3).

8. System according to any one of Claims 1 to 7, additionally having a control device (6) for controlling at least one building services component (7, 8) on the basis of a presence profile (P) output by the data-processing device (6).

9. System according to Claim 8,
**characterized in that**
the control device (6) and the data-processing device (6) belong to different building services sub-systems, and an interface is provided for forwarding the presence profile (P) from the building services subsystem having the data-processing device (6) to the building services sub-system having the control device (6).

10. Method for creating a presence profile (P) of persons in a detection area (B), having the steps of:
detecting a presence of a person in each of a plurality of different sub-areas (T1, ..., T3) of the detection area by means of at least one sensor (S1, ..., S3);
creating a presence profile (P) on the basis of the presence of persons detected in the different sub-areas (T1, ..., T3);
comparing the created presence profile with at least one stored presence profile; and
outputting a signal given a certain degree of agreement or deviation of the created presence profile with/from the stored presence profile; wherein
the presence profile (P) indicates movement directions (4) of the persons at a defined point in time, speeds of the movements of the persons in the detection area (B) and/or a number of the presences detected in the detection area (B) or in each sub-area (T1, ..., T3) over a defined time period.

11. Method according to Claim 10, wherein
the detected presences of the persons are chronologically and/or also spatially classified and stored, the presence of at least one person in the detection area (B) or in a sub-area (T1, ..., T3) is predicted and at least one presence profile (P) is created on the basis of the predicted presence.

12. Method according to Claim 11, wherein
a presence profile (P) indicates movement directions (4) of detected persons at a defined point in time, movements of the persons over a defined time period and/or speeds of the movements of the persons in the detection area (B);
a lamp (7) is controlled based on the created presence profile (P) that is output; and
in the control step, the lamp (7) is switched on or its intensity increased in the event of a movement of a person in the direction of the lamp, is switched off or dimmed in the event of a movement of the person away from the lamp, and/or the on/off point in time or the speed of intensity change is adapted to the speed of the movements.

13. Method according to either of Claims 10 to 11, wherein
the presence profile (P) indicates a number of the presences detected or predicted in the detection area or in each sub-area (T1, ..., T3) over a defined time period;
a building services component is a heating or climate control device arranged in the detection area; and
in the control step, the heating or climate control device is controlled or regulated on the basis of a heat distribution plan created under consideration of the presence profile.

## Revendications

1. Système pour la création d'un profil de présence (P) de personnes dans une zone de détection (B), le dispositif comprenant :
au moins un capteur (S1..S3) pour la détection résolue selon des zones partielles (T1..T3) de la zone de détection (B) d'une présence d'au moins une personne et un dispositif de traitement de données (1) pour la création et l'émission d'au moins un profil de présence (P) pour la zone de détection (B) sur la base des présences de personnes détectées dans les différentes zones partielles (T1..T3), le profil de présence (P) indiquant des sens de déplacement (4) des personnes à un moment déterminé, des vitesses des déplacements des personnes dans la zone de détection (B) et/ou un nombre des présences détectées durant une période de temps déterminée dans la zone de détection (B) ou dans chaque zone partielle (T1..T3) ;
**caractérisé en ce que**
le dispositif de traitement de données (1) est conçu pour comparer le profil de présence créé à au moins un profil de présence enregistré et pour émettre un signal dans le cas d'un degré déterminé de concordance ou d'écart.

2. Système selon la revendication 1, dans lequel
le dispositif de traitement de données (1) est conçu pour classer et enregistrer temporellement ou localement les présences de personnes détectées, pour prédire la présence d'au moins une personne dans la zone de détection (B) ou dans une zone partielle (T1..T3) et pour créer et émettre au moins un profil de présence (P) sur la base de la présence prédite.

3. Système selon la revendication 1 ou 2, dans lequel
un profil de présence (P) indique des déplacements des personnes durant une période de temps déterminée.

4. Système selon l'une quelconque des revendications 1 à 3, dans lequel
ledit au moins un capteur (S1..S3) est conçu pour détecter des températures d'objets dans la zone de détection (B).

5. Système selon la revendication 4, dans lequel
le dispositif de traitement de données (1) est conçu pour différencier, sur la base des températures d'objets, les personnes d'autres objets dans la zone de détection (B).

6. Système selon l'une quelconque des revendications 1 à 5, dans lequel un plan de distribution de chaleur est créé tenant compte du profil de présence (P).

7. Système selon l'une quelconque des revendications 1 à 6, dans lequel ledit au moins un capteur (S1..S3) est un détecteur de mouvement équipé d'un système optique pour la détection séparée de personnes et/ou d'objets dans les zones partielles (T1 ... T3) individuelles ou au moins quelques capteurs (S1..S3) sont des détecteurs de mouvement, un capteur étant associé respectivement à chacune des différentes zones partielles (T1..T3).

8. Système selon l'une quelconque des revendications 1 à 7, présentant en outre un dispositif de commande (6) pour la commande d'au moins un composant de technique du bâtiment (7, 8) sur la base d'un profil de présence (P) émis par le dispositif de traitement de données (6).

9. Système selon la revendication 8,
**caractérisé en ce que**
le dispositif de commande (6) et le dispositif de traitement de données (6) appartiennent à différents systèmes partiels de technique du bâtiment et une interface est prévue pour la transmission du profil de présence (P) du système partiel de technique du bâtiment présentant le dispositif de traitement de données (6) au système partiel de technique du bâtiment présentant le dispositif de commande (6).

10. Procédé pour la création d'un profil de présence (P) de personnes dans une zone de détection (B), comprenant les étapes de :
détection d'une présence d'une personne dans chacune d'une pluralité de différentes zones partielles (T1..T3) de la zone de détection au moyen d'au moins un capteur (S1..S3) ;
création d'un profil de présence (P) sur la base des présences de personnes détectées dans les différentes zones partielles (T1..T3) ;
comparaison du profil de présence créé à au moins un profil de présence enregistré ; et
émission d'un signal dans le cas d'un degré déterminé de concordance ou d'écart du profil de présence créé avec le/par rapport au profil de présence enregistré ;
le profil de présence (P) indiquant des sens de déplacement (4) des personnes à un moment déterminé, des vitesses des déplacements des personnes dans la zone de détection (B) et/ou un nombre des présences détectées durant une période de temps déterminée dans la zone de détection (B) ou dans chaque zone partielle (T1..T3).

11. Procédé selon la revendication 10, dans lequel
les présences de personnes détectées sont classées et enregistrées temporellement et/ou également localement, la présence d'au moins une personne dans la zone de détection (B) ou dans une zone partielle (T1..T3) est prédite et au moins un profil de présence (P) est créé sur la base de la présence prédite.

12. Procédé selon la revendication 11, dans lequel
le profil de présence (P) indique des sens de déplacement (4) des personnes détectées à un moment déterminé, des déplacements des personnes durant une période de temps déterminée et/ou des vitesses des déplacements des personnes dans la zone de détection (B) ;
un luminaire (7) est commandé sur la base du profil de présence (P) créé émis ; et
dans l'étape de commande, le luminaire (7) est allumé ou son intensité est augmentée dans le cas d'un déplacement d'une personne vers le luminaire, éteint ou son intensité est réduite dans le cas d'un déplacement de la personne s'éloignant du luminaire et/ou le moment d'allumage/extinction ou la vitesse d'ajustement est adapté(e) à la vitesse des déplacements.

13. Procédé selon l'une quelconque des revendications 10 ou 11, dans lequel
le profil de présence (P) indique un nombre des présences détectées ou prédites dans la zone de détection ou dans chaque zone partielle (T1..T3) durant une période de temps déterminée ;
un composant de technique du bâtiment est un appareil de chauffage ou un climatiseur disposé dans la zone de détection ; et
dans l'étape de commande, l'appareil de chauffage ou le climatiseur est commandé ou réglé sur la base d'un plan de distribution de chaleur créé tenant compte du profil de présence.
